# EUROPÄISCHE PATENTANMELDUNG

(11) **EP 3 991 931 A1**
(43) Veröffentlichungstag der Anmeldung: **04.05.2022**
(21) Anmeldenummer: 21203734.5
(22) Anmeldetag: 20.10.2021
(51) Int. Cl.: B27N 1/00, B27N 3/00, C08G 8/04, C08G 8/06, C08L 61/06, C08L 61/12, C08L 97/02, C09J 161/06, C09J 161/12

(54) **VERFAHREN ZUR HERSTELLUNG EINES VERBUNDWERKSTOFFS**

(30) Priorität: 28.10.2020 DE 102020128378
(71) Anmelder: AVA Biochem AG, 6300 Zug (CH)
(72) Erfinder: Krawielitzki, Stefan, 6343 Holzhäusern (CH)
(74) Vertreter: Christ, Niko

(57) **Zusammenfassung**

Im Stand der Technik ist es bereits bekannt, Verbundmaterialien auf der Basis von nachwachsenden Rohstoffen herzustellen. Hierbei werden im Allgemeinen Naturfasern mit einem Harz durchtränkt und es entsteht nach dessen Aushärten ein Verbundwerkstoff. Zwar werden derartige Verbundwerkstoffe und Produkte daraus, wie beispielsweise Faserplatten, häufig als Naturprodukte angeboten, jedoch enthalten diese auch Komponenten, welche nicht aus den beworbenen Naturprodukten entstammen.

Die vorliegende Erfindung macht es sich hingegen zur Aufgabe, ein tatsächliches Naturprodukt zu schaffen, indem sowohl das Bindemittel als auch die strukturbildenden Materialien aus dem gleichen nachwachsenden Rohstoff hergestellt werden.

## Beschreibung

Die vorliegende Erfindung betrifft ein Verfahren zur Herstellung eines Verbundwerkstoffs, wobei ein Bindemittel mit lignocellulosehaltigem Material in Kontakt gebracht wird und anschließend unter Bildung des Verbundwerkstoffs ausgehärtet wird, wobei sowohl das Bindemittel als auch das mit dem Bindemittel in Kontakt zu bringende lignocellulosehaltige Material ausschließlich aus dem gleichen nachwachsenden Rohstoff hergestellt sind.

Ein derartiges Verfahren ist bereits aus der DE 690 34 003 T2 vorbekannt. Weiter ist hinsichtlich des Standes der Technik auf die CN 103012335 A hinzuweisen.

Die Herstellung eines solchen Verbundwerkstoffs ist unter anderem aus der internationalen Patentanmeldung WO 2014/107767 A1 vorbekannt. Diese offenbart ein Verfahren zur Herstellung einer Verbundplatte, die aus einer Mischung von cellulosem Pflanzenmaterial mit hydrophilen Substanzen und Harzen gebildet ist, wobei unter dem cellulosen Pflanzenmaterial eine Vielzahl von Holzarten oder Nichtholzarten zu verstehen ist.

Weiterhin ist aus der deutschen Patentanmeldung DE 101 32 749 A1 ein faserverstärkter Werkstoff, basierend auf duroplastischem Polymer oder einem Polymer-Blend, wobei sich ein solches Polymer dadurch auszeichnet, dass das Polymer ein Polykondensat von Mono-, Di- und/oder Oligomeren, insbesondere aus der Gruppe der Furfurylalkohole und Phenole ist und der Werkstoff natürliche Verstärkungsfasern, bevorzugt Miscanthus-Fasern, enthält.

Ferner ist ein Verfahren zur Herstellung eines Holzspanwerkstoffes mit darin verwendeten Härtern für Aminoplaste aus dem Deutschen Patent DE 10 2015 103 511 B4 vorbekannt. Das Verfahren beinhaltet dabei drei wesentliche Schritte: Zunächst muss ein erstes lignocellulosehaltiges Material in Form von Holzpartikeln bereitgestellt werden, welches dann in einem weiteren Schritt mit einer Zusammensetzung von mindestens einem Aminoplastharz und mindestens einem Härter mit einem zweiten lignocellulosehaltigen Material, welches aus einem anderen Rohstoff als das erste lignocellulosehaltige Material stammt, verleimt wird, wobei das Aminoplastharz ein Melamin- oder Harnstoffharz ist und der erste Härter durch hydrothermischen und/oder mechanischen Aufschluss aus einem zweiten lignocellulosehaltigen Material gewonnen wurde. Schließlich werden die beiden lignocellulosehaltigen Materialien miteinander zu einem Holzspanwerkstoff verpresst.

Somit werden Naturfasern bzw. nachwachsende Rohstoffe bereits in dem hier aufgezeigten Stand der Technik zur Herstellung von Verbundwerkstoffen genutzt. Allerdings wird hierbei bei einigen Komponenten immer noch auf aus fossilen Ressourcen entstammenden Materialien und/oder auf weitere, insbesondere nachwachsende Rohstoffe zurückgegriffen.

Um diesem Mangel zu begegnen, hat sich das erfindungsgemäße Verfahren zur Aufgabe gestellt, einen Verbundwerkstoff bereitzustellen, bei der alle verwendeten Materialien zur Herstellung des Verbundwerkstoffs aus dem gleichen nachwachsenden Rohstoff entstammen beziehungsweise aus diesem isoliert, extrahiert, hergestellt oder durch hydrothermischen und/oder mechanischen Aufschluss gewonnen werden.

Diese Aufgabe wird mit einem Verfahren gemäß dem geltenden Anspruch 1 gelöst. Vorteilhafte Ausgestaltungen des Verfahrens können den abhängigen Ansprüchen entnommen werden.

Erfindungsgemäß handelt es sich um ein Verfahren zur Herstellung eines Verbundwerkstoffs. Bekannt ist, dass zur Herstellung eines solchen Verbundwerkstoffs ein Bindemittel mit einem zu bindenden Material, meist Fasern oder Teile eines lignocellulosehaltigen Materials, beispielsweise Schnitzel oder Späne, in Kontakt gebracht wird, wobei das Bindemittel meist ein Polymer in Form von Harzen, Ölen sowie Dispersionen , etwa Latexdispersionen, Stärke oder Proteine wie etwa Gelatine ist. Um den Verbundwerkstoff schließlich herzustellen, wird das in Kontakt mit dem lignocellulosehaltigen Material gebrachte Bindemittel ausgehärtet, wobei die Aushärtung abhängig vom jeweils genutzten Bindemittel beispielsweise durch thermische Behandlung stattfindet.

Das erfindungsgemäße Verfahren zeichnet sich dadurch aus, dass die zur Bereitstellung des Bindemittels, meist einzelnen chemischen Komponenten, insbesondere die polymerisationsfähigen Verbindungen, sowie das hiermit in Kontakt zu bringende lignocellulosehaltige Material, insbesondere in Form von Fasern, Spänen oder Schnitzeln, gleichermaßen von einem nachwachsenden Rohstoff entstammen. Dies bedeutet, dass die polymerisationsfähigen Verbindungen, insbesondere phenolischen Verbindungen, durch chemische Verfahren, insbesondere durch hydrothermischen Aufschluss, aus dem nachwachsenden Rohstoff gewonnen werden, um hiermit ein Bindemittel herzustellen beziehungsweise bereitzustellen, das wiederum genutzt werden kann, um mit den ebenfalls aus dem nachwachsenden Rohstoff entstammenden lignocellulosehaltigen Materialien, insbesondere deren Fasern, einen Verbundwerkstoff zu bilden.

Bei einem solchen Verfahren ist es vorteilhaft, dass keine zusätzlichen fossilen Rohstoffe beziehungsweise aus fossilen Rohstoffen gewonnenen oder hieraus entstammenden chemischen Verbindungen zur Herstellung eines Bindemittels benötigt werden, sondern letztlich nur ein einziger nachwachsender Rohstoff, aus dem sich alle Komponenten zur Herstellung des Verbundwerkstoffes isolieren, extrahieren oder herstellen lassen.

Somit sind die nach dem erfindungsgemäßen Verfahren hergestellten Verbundwerkstoffe gegenüber den durch die aus dem Stand der Technik bekannten Verfahren hergestellten Verbundwerkstoffen, nachhaltiger, da sämtliche Bestandteile zur Herstellung des Verbundwerkstoffes aus dem gleichen nachwachsenden Rohstoff entstammen.

Bevorzugt ist hierbei die Verwendung von Miscanthus, das als nachwachsender Rohstoff das Verfahren nochmals umweltfreundlicher macht, da Miscanthus schnell wächst, wenig Wasser und Dünger benötigt und darüber hinaus über einen hohen Brennwert und eine sehr günstige CO₂-Bilanz verfügt. Des Weiteren kann es auf fast jedem Ackerboden angebaut und schließlich mit wenig Aufwand wieder geerntet werden. Ferner besteht bei Verwendung von Miscanthus kein "Tank-Teller-Konflikt" wie es beispielweise bei anderen Nutzpflanzen, insbesondere bei Mais, der Fall ist, da Miscanthus nicht zum Verzehr beziehungsweise nicht als Futtermittel für die Tierzucht geeignet ist, sondern aktuell lediglich als Brennmittel beziehungsweise, wie bereits erwähnt, als Verstärkungsfaser in Verbundwerkstoffen Anwendung findet. Allerdings stellt abseits des "Tank-Teller-Konflikts" auch Mais einen geeigneten Rohstoff dar, aus dem der erfindungsgemäße Verbundwerkstoff hergestellt werden kann.

Bevorzugt handelt es sich bei dem zur Herstellung eines Verbundwerkstoffs verwendeten Bindemittels um ein aus dem nachwachsenden Rohstoffhergestelltes thermisch härtbares Harz. Besonders bevorzugt enthält dieses thermisch härtbare Harz 5-Hydroxymethylfurfural (5-HMF). Dabei werden insbesondere aus dem Stand der Technik bekannte Verfahren zur Gewinnung von thermisch härtbaren Harzen, insbesondere von Harzen die 5-Hydroxymethylfurfural enthalten, aus nachwachsenden Rohstoffen, insbesondere lignocellulosehaltige Materialien, verwendet. Ein Beispiel hierfür ist die Gewinnung von 5-HMF aus lignocellulosehaltigen Materialien durch säurekatalysierte Hydrolyse mit einer sich anschließenden Dehydratisierung.

In einer alternativen Ausführung verwendet das Verfahren zur Herstellung eines Verbundwerkstoffs ein thermisch härtbares Harz, welches durch Umsetzung einer polykondensationsfähigen phenolischen Verbindung mit 5-HMF hergestellt werden kann. Auch diese polykondensationsfähige phenolische Verbindung kann dabei durch chemische Aufschlussverfahren aus dem lignocellulosehaltigen Material des nachwachsenden Rohstoffs gewonnen werden.

In einer vorteilhaften Ausgestaltung des Verfahrens beträgt das molare Verhältnis der eingesetzten 5-HMF-Menge zu der Gesamtmenge an phenolischer Verbindung 0,20:1 bis 3:1, bevorzugt 0,3:1 bis 1:1, besonders bevorzugt 0,45:1 bis 0,70:1. Prinzipiell kann das molare Verhältnis der eingesetzten 5-HMF-Menge zu der Gesamtmenge an phenolischer Verbindung über einen breiten Bereich variiert werden. Auch ein molarer Überschuss von 5-HMF kann vorteilhaft sein. Ein für die jeweilige phenolische Verbindung geeignetes molares Verhältnis lässt sich für den Fachmann leicht ermitteln.

Dabei kann das 5-HMF bevorzugt derart vorliegen, dass dieses wenigstens ein 5-HMF-Oligomer umfasst. Es wird angenommen, dass die 5-HMF-Oligomere reaktiver als die 5-HMF-Monomere sind, womit ein schnelleres Aushärten des Bindemittels beziehungsweise des thermisch härtbaren Harzes bei gleichzeitig besserer Vernetzung erreicht wird. Dass solche wasserlöslichen linearen und verzweigten 5-HMF-Oligomere in Lösungen von 5-HMF vorhanden sind, ist beispielsweise aus der DE 10 2014 112 240 A1 vorbekannt. Die Bildung dieser 5-HMF-Oligomere kann beispielsweise mittels HPLC-Analyse verfolgt werden.

Als 5-HMF-Oligomere im Sinne der vorliegenden Erfindung werden im Unterschied zu 5-HMF-Monomeren Verbindungen verstanden, die aus mindestens zwei verknüpften 5-HMF-Einheiten/Monomeren zusammengesetzt sind und üblicherweise ein Molekulargewicht von bis zu 3000 g/mol aufweisen. Dabei kann das innerhalb des 5-HMF enthaltene 5-HMF-Oligomer 2 bis 20 Wiederholungs- beziehungsweise Monomer-Einheiten, bevorzugt 2 bis 10 Einheiten, besonders bevorzugt 2 bis 4 Einheiten, von 5-HMF innerhalb der Oligomer-Kette aufweisen.

Der Vorteil, der sich daraus ergibt, ist unter anderem, dass diese 5-HMF-Oligomere unter moderaten Bedingungen, also insbesondere bei Raumtemperatur und unter Normaldruck, gut wasserlöslich sind. Daher eignen sich die 5-HMF-Oligomere ideal für eine Polykondensation in einem wässrigen Medium. Je kleiner die Kettenlänge, umso besser ist die Wasserlöslichkeit der jeweiligen 5-HMF-Oligomeren. Daher sind gerade kurzkettige 5-HMF-Oligomere, insbesondere 5-HMF-Oligomere mit zwei Einheiten aufgrund ihrer hohen Wasserlöslichkeit für die Umsetzung beziehungsweise zur Bereitstellung eines reaktiven thermisch härtbaren Harzes als Bindemittel zur Herstellung eines erfindungsgemäßen Verbundwerkstoffs besonders geeignet.

In einer weiteren bevorzugten Ausgestaltung des Verfahrens ist das für die Umsetzung eingesetzte 5-HMF-Oligomer ein kohlenstoffverknüpftes 5-HMF-Oligomer. Diese in der bevorzugten Ausgestaltung des Verfahrens bezeichneten 5-HMF-Oligomere weisen zumindest zwei 5-HMF-Einheiten auf, die über eine Kohlenstoff-Kohlenstoff-Bindung unter Einbeziehung eines aromatisch gebundenen Kohlenstoffatoms an Position 3 oder 4 des Furanrings einer der beiden 5-HMF-Einheiten miteinander verknüpft sind. Insbesondere enthält das kohlenstoffverknüpfte 5-HMF-Oligomer zumindest eine erste Einheit, dessen Aldehydgruppen-Kohlenstoffatom mit einem aromatisch gebundenen Kohlenstoffatom des Furanrings einer zweiten Einheit verknüpft ist.

Die Erfinder haben herausgefunden, dass sich neben 5-HMF-Oligomeren, die aus der Verknüpfung von Aldehyd- und/oder Hydroxylgruppen der 5-HMF-Einheiten resultieren und die die entsprechenden Ether-, Hemiacetal- und/oder Acetal-Bindungen aufweisen, sowohl unter sauren als auch unter basischen Bedingungen 5-HMF-Oligomere bilden, bei denen Einheiten über eine Kohlenstoff-Kohlenstoff-Bindung verknüpft sind. Diese Bedingungen können beispielsweise bei einem elektrophilen Angriff einer Aldehydgruppe eines ersten 5-HMF-Monomers oder einer 5-HMF-Einheit eines 5-HMF-Oligomer auf das Kohlenstoffatom in Position 3 oder 4 eines Furanrings eines zweiten 5-HMF-Monomers oder einer 5-HMF-Einheit eines 5-HMF-Oligomers entstehen.

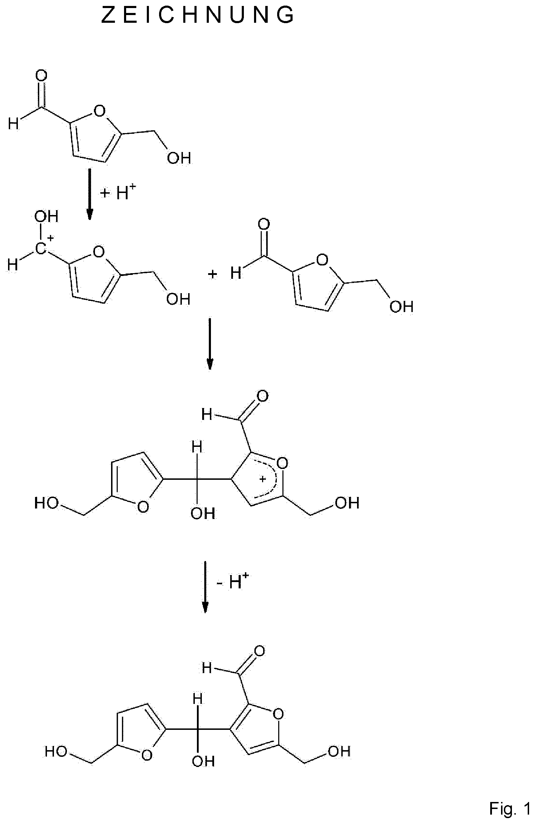

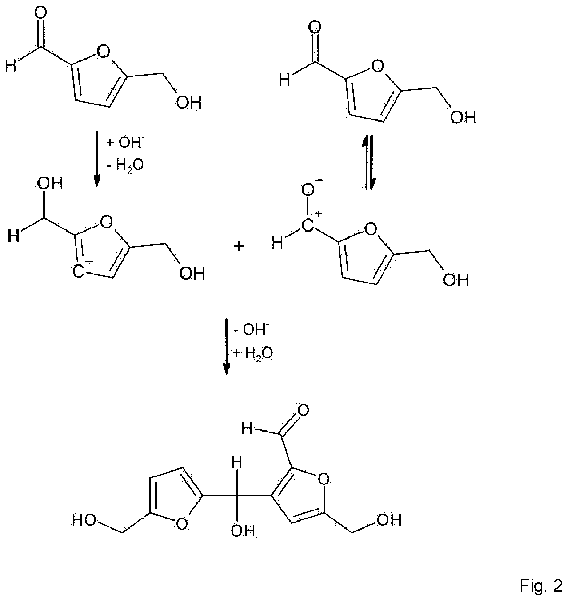

Die für die 5-HMF-Oligomerbildung im Sauren und im Basischen vorgeschlagenen Mechanismen können den Figuren 1 und 2 entnommen werden. Aus diesem wird unter anderem ersichtlich, dass 5-HMF-Oligomere, die über eine Verknüpfung durch eine Kohlenstoff-Kohlenstoff-Bindung verfügen, gleichzeitig auch über mehr freie funktionelle Aldehyd- und/oder Hydroxyl-Gruppen verfügen als 5-HMF-Oligomere, bei denen die Verbindung lediglich über Aldehyd- und/oder Hydroxylgruppen des 5-HMFs zustande kommt. Hierdurch ergeben sich sehr reaktive 5-HMF-Oligomere, die über zusätzliche Vernetzungsmöglichkeiten verfügen.

In dem kohlenstoffverknüpften 5-HMF-Oligomer können neben der unter Einbeziehung eines aromatisch gebundenen Kohlenstoffs geknüpften Bindung auch andere Bindungen wie Ether-, Hemiacetal- und/oder Acetal-Bindungen enthalten sein.

Zur Erhöhung der Reaktivität des resultierenden Harzes ist es ausreichend, wenn bereits zwei der 5-HMF-Einheiten unter Einbeziehung eines aromatisch gebundenen Kohlenstoffatoms verknüpft sind. Insbesondere enthalten kohlenstoffverknüpfte 5-HMF-Oligomere mit zwei Einheiten einen vergleichsweise hohen Anteil an freien funktionellen, reaktiven Gruppen pro 5-HMF-Oligomer. Das kohlenstoffverknüpfte 5-HMF-Oligomer kann auch mehrere solcher Kohlenstoff-Kohlenstoff-Verknüpfungen aufweisen.

Ferner können neben den kohlenstoffverknüpften 5-HMF-Oligomeren noch weitere 5-HMF-Oligomere mit Ether-, Hemiacetal- und/oder Acetal-Bindungen enthalten sein. Aufgrund des hohen Anteils an freien funktionellen Gruppen reichen bereits geringe Mengen an kohlenstoffverknüpftem 5-HMF-Oligomer aus, um sehr reaktive Oligomere bereitzustellen. Ebenfalls von der Erfindung umfasst ist, dass das kohlenstoffverknüpfte 5-HMF-Oligomer bis zu oder bis nahezu 100 Gew.%, bezogen auf die Gesamtmenge an 5-HMF-Oligomer, ausmacht.

Bevorzugt enthält der Schritt der Bereitstellung eines Bindemittels, insbesondere eines thermisch härtbaren Harzes, dass eine mehr oder weniger reine Lösung von HMF-Monomeren und/oder HMF-Oligomeren Bedingungen ausgesetzt wird, die zur Bildung von HMF-Oligomeren führen. Die Erfinder haben festgestellt, dass wässrige HMF-Lösungen, die beispielsweise aus kristallinem HMF mit Wasser hergestellt wurden, unter Bildung der HMF-Oligomere altern. Die Menge und das Molekulargewicht der HMF-Oligomere kann hierbei über dem Fachmann geläufige Analysemittel wie HPLC und NMR-Spektroskopie bestimmt werden.

Die Bildung von HMF-Oligomeren unter moderaten Bedingungen, das bedeutet unter Normaldruck und Raumtemperatur, kann im Bereich von Stunden, Tagen oder Wochen liegen.

Besonders bevorzugt umfassen die Bedingungen, denen die HMF-Lösung ausgesetzt wird, eine Alkalisierung oder Ansäuerung der Lösung. Ebenfalls besonders bevorzugt umfassen die Bedingungen das Erhitzen der Lösung, gegebenenfalls in Kombination mit einer Ansäuerung oder Alkalisierung. Durch Ansäuerung, Alkalisierung und Erhitzen kann der Alterungsprozess beschleunigt werden.

Eine besonders bevorzugte Variante des Schritts der Bereitstellung des Bindemittels beinhaltet, dass 5-Hydroxymethylfurfural, welches mindestens ein 5-HMF-Oligomer umfasst, durch Behandlung von einer lignocellulosehaltigen Suspension des nachwachsenden Rohstoffs unter hydrothermalen Bedingungen zur Verfügung gestellt wird.

Die Behandlung derartiger Biomasse von Kohlenhydraten oder von aus Kohlenhydraten abgeleiteten Verbindungen unter hydrothermalen Bedingungen zur Gewinnung von 5-HMF ist bekannt und sieht vor, dass das Ausgangsmaterial in wässrigem Medium Druck und erhöhter Temperatur ausgesetzt wird. Bei der Behandlung einer solchen wässrigen Suspension unter hydrothermalen Bedingungen werden 5-HMF-Oligomere gewonnen.

Bevorzugte hydrothermale Bedingungen sind dabei Sattdampfdruck und Temperaturen von 150 °C bis 250 °C. Dies hat den Vorteil, dass die Bildung von 5-HMF-Oligomeren in Abhängigkeit des Ausgangsmaterials innerhalb von Minuten bis zu wenigen Stunden abgeschlossen ist.

Dabei wird der Schritt der Bereitstellung solange durchgeführt, bis die gewünschte Menge an 5-HMF-Oligomer erreicht oder die Reaktion abgeschlossen ist. Bevorzugt liegt zum Ende des Schritts der Bereitstellung wenigstens ein 5-HMF-Oligomer in der wässrigen Lösung vor. Besonders bevorzugt wird der Gehalt des Oligomers oder der Oligomere beeinflusst, indem die von dem Schritt der Bereitstellung umfasste Lösung einer Filtration an mindestens einem Filtriermittel unterzogen wird. Solch eine Behandlung einer wässrigen 5-HMF-Lösung nach einer hydrothermalen Karbonisierung wird beispielsweise in der DE 10 2014 112 240 A1 beschrieben.

Nach einer weiteren vorteilhaften Ausgestaltung des Verfahrens beträgt der Anteil an 5-HMF-Oligomeren 0,05 Gew.% bis 10 Gew.%, bezogen auf die Gesamtmenge an eingesetztem HMF, bevorzugt 0,1 Gew.% bis 8 Gew.%, bezogen auf die Gesamtmenge an eingesetztem 5-HMF, besonders bevorzugt 2 Gew.% bis 4 Gew.%, bezogen auf die Gesamtmenge an eingesetztem 5-HMF.

Aufgrund der bereits oben beschriebenen hohen Reaktivität reichen bereits geringe Mengen an 5-HMF-Oligomer aus, um hoch reaktive thermisch härtbare Harze bereitzustellen. Dabei ist es für den Fachmann selbstverständlich, dass auch höhere Anteile an 5-HMF-Oligomeren eingesetzt werden können. Ebenfalls von der Erfindung umfasst, ist, dass das 5-HMF-Oligomer bis zu oder bis nahezu 100 Gew.%, bezogen auf die Gesamtmenge an eingesetztem 5-HMF, ausmacht.

Bei der polykondensationsfähigen phenolischen Verbindung kann es sich um eine solche handeln, die üblicherweise für die Herstellung von thermisch härtbaren Harzen verwendet werden. Als polykondensationsfähige phenolische Verbindung kommen hierbei prinzipiell alle hydroxylgruppentragenden aromatischen Verbindungen in Frage, die im Aromaten mindestens ein Kohlenstoffatom aufweisen, das für eine nukleophile Additionsreaktion zwischen der phenolischen Verbindung und dem 5-HMF geeignet ist.

Vorteilhafterweise ist die polykondensationsfähige phenolische Verbindung Phenol, Lignin, eine aus Lignin abgeleitete phenolische Verbindung, Resorcin, Hydrochinon, Hydroxyhydrochinon, Brenzcatechin, Phloroglucin oder ein Gemisch von mindestens zwei dieser Verbindungen.

Abhängig von der jeweils verwendeten phenolischen Verbindung kann der pH-Wert im Bereitstellungsschritt bzw. bei der Umsetzung zur Bereitstellung eines thermisch härtbaren Harzes über einen breiten Bereich variieren. Beispielsweise kann der pH-Wert im Bereich von 6 bis 10, bevorzugt im Bereich von 7 bis 8,5, liegen.

In einer weiteren vorteilhaften Ausführung des Verfahrens zur Herstellung eines Verbundwerkstoffs findet die Herstellung, beziehungsweise die Bereitstellung des Bindemittels, insbesondere des thermisch härtbaren Harzes, bei Temperaturen im Bereich von 40°C bis 140°C statt.

Nach einer weiteren vorteilhaften Ausgestaltung des Verfahrens umfasst das lignocellulosehaltige Material, welches mit dem Bindemittel in Kontakt gebracht wird, Späne, Fasern, Flocken, Chips, Teilchen, Streifen, Plättchen und Platten sowie Mischungen aus diesen Bestandteilen. Das lignocellulosehaltige Material kann hinsichtlich der Vielzahl an unterschiedlichen Verbundwerkstoffen in einem breiten Bereich variieren.

Das in Kontakt Bringen des Bindemittels mit lignocellulosehaltigem Material kann durch dem Fachmann bekannte Methoden erfolgen. Üblicherweise wird in Abhängigkeit von der Beschaffenheit des Bindemittels und der Konfiguration des lignocellulosehaltigen Materials das in Kontakt Bringen durchgeführt, beispielsweise durch Aufsprühen, Aufstreichen, Vermischen unter mechanischem Rühren oder Walzenauftrag.

Nach einer weiteren vorteilhaften Ausgestaltung des Verfahrens wird das lignocellulosehaltige Material mit einer Menge von 2 Gew.% bis 20 Gew.%, bevorzugt 5 Gew.% bis 15 Gew.%, Bindemittel, insbesondere Harz, bezogen auf das Gewicht des trockenen lignocellulosehaltigen Materials, in Kontakt gebracht. Die Bindemittelmenge kann je nach der Konfiguration des lignocellulosehaltigen Materials und den Anforderungen an den Verbundwerkstoff in einem breiten Bereich variieren. Es kann zudem vorteilhaft sein, Mischungen aus zwei oder mehr Bindemitteln, insbesondere Harzen, mit dem lignocellulosehaltigen Material in Kontakt zu bringen.

Nach einer weiteren vorteilhaften Ausgestaltung des Verfahrens umfasst das Aushärten des Bindemittels ein Verpressen des lignocellulosehaltigen Materials mit dem Bindemittel. Üblicherweise kommen Drücke von 1 bis 30 mPa zum Einsatz. Bevorzugt erfolgt das Verpressen bei einer Temperatur im Bereich von 120°C bis 250°C, besonders bevorzugt in dem Bereich von 210°C bis 230°C. Aufgrund der Reaktivität der Bindemittel, insbesondere des thermisch härtbaren Harzes, genügen bereits wenige Minuten zum Erhalt von Verbundwerkstoffen mit guten mechanischen Eigenschaften. Bevorzugt liegt die Pressdauer im Bereich von 3 bis 10 Minuten, besonders bevorzugt im Bereich von 5 bis 8 Minuten. Eine kurze Pressdauer ist sowohl aus produktionstechnischen als auch wirtschaftlichen Gesichtspunkten vorteilhaft.

Die erhaltenen Verbundwerkstoffe können schließlich zur Stabilisierung in einem Trockenschrank oder Holztrockner bei Temperaturen im Bereich von 10°C bis 100°C unter kontrollierter Atmosphäre nachbehandelt werden. Eine solche kann beispielsweise eine relative Luftfeuchte im Bereich von 40% bis 70% umfassen.

Ein Vorteil der Herstellung eines Verbundwerkstoffs mit dem erfindungsgemäßen Verfahren ist, dass der Verbundwerkstoff frei von Formaldehyd sowie Aminoplasten ist und ausschließlich auf Basis eines natürlichen, erneuerbaren und nachwachsenden Rohstoffs hergestellt werden kann.

Ein weiterer Vorteil des Verfahrens ist, dass aufgrund der Reaktivität der HMF-Oligomere in den vorteilhaften Ausführungen des Verfahrens kurze Presszeiten im Minutenbereich ausreichen, um einen Verbundwerkstoff mit sehr guten mechanischen Eigenschaften zu erhalten. Dies ist unter wirtschaftlichen Gesichtspunkten und hinsichtlich der industriellen Fertigung von Verbundwerkstoffen hoch erwünscht.

Es zeigen:
- Figur 1: einen vorgeschlagenen Mechanismus der Kohlenstoff-Kohlenstoff-Bindungsbildung unter sauren Bedingungen anhand der Dimerisierung zweier 5-HMF-Moleküle, sowie
- Figur 2: einen vorgeschlagenen Mechanismus der Kohlenstoff-Kohlenstoff-Bindungsbildung unter basischen Bedingungen anhand der Dimerisierung zweier 5-HMF-Moleküle.

Sämtliche Merkmale der Erfindung können sowohl einzeln als auch in beliebiger Kombination miteinander erfindungswesentlich sein.

## Patentansprüche

1. Verfahren zur Herstellung eines Verbundwerkstoffs, wobei ein Bindemittel mit lignocellulosehaltigem Material in Kontakt gebracht und anschließend unter Bildung des Verbundwerkstoffs ausgehärtet wird, wobei sowohl das Bindemittel als auch das mit dem Bindemittel in Kontakt zu bringende lignocellulosehaltige Material ausschließlich aus dem gleichen nachwachsenden Rohstoff hergestellt sind,
**dadurch gekennzeichnet, dass** das Bindemittel ein thermisch härtbares Harz ist und 5-Hydroxymethylfurfural (5-HMF) umfasst, wobei das 5-HMF wenigstens ein 5-HMF-Oligomer umfasst.

2. Verfahren zur Herstellung eines Verbundwerkstoffs gemäß Anspruch 1, **dadurch gekennzeichnet, dass** es sich bei dem nachwachsenden Rohstoff um Miscanthus handelt.

3. Verfahren gemäß wenigstens einem der Ansprüche 1 oder 2, **dadurch gekennzeichnet, dass** das HMF-Oligomer 2 bis 20 Einheiten aufweist.

4. Verfahren gemäß einem der vorhergehenden Ansprüche, **dadurch gekennzeichnet, dass** das 5-HMF-Oligomer ein kohlenstoffverknüpftes 5-HMF-Oligomer ist.

5. Verfahren gemäß einem der vorhergehenden Ansprüche, **dadurch gekennzeichnet, dass** der Anteil an HMF-Oligomer, bezogen auf die Gesamtmenge an eingesetztem HMF, 0,05 Gew.% bis 10 Gew.% beträgt.

6. Verfahren gemäß einem der vorhergehenden Ansprüche, **dadurch gekennzeichnet, dass** die polykondensationsfähige phenolische Verbindung Phenol, Lignin, eine aus Lignin abgeleitete phenolische Verbindung, Resorcin, Hydrochinon, Hydroxyhydrochinon, Brenzcatechin, Phrologlucin oder ein Gemisch von mindestens zwei dieser Verbindungen ist.

7. Verfahren gemäß einem der vorhergehenden Ansprüche, **dadurch gekennzeichnet, dass** die Herstellung des Bindemittels bei Temperaturen im Bereich von 40°C bis 140°C durchgeführt wird.

8. Verfahren gemäß einem der vorhergehenden Ansprüche, **dadurch gekennzeichnet, dass** das lignocellulosehaltige Material, welches mit dem Bindemittel in Kontakt gebracht wird, Späne, Fasern, Flocken, Chips, Teilchen, Plätzchen und Platten oder eine Mischung aus wenigstens zwei von diesen umfasst.

9. Verfahren gemäß einem der vorhergehenden Ansprüche, **dadurch gekennzeichnet, dass** das lignocellulosehaltige Material mit einer Menge von 2 Gew.% bis 20 Gew.%, bevorzugt mit einer Menge von 5 Gew.% bis 15 Gew.%, Bindemittel, bezogen auf das Gewicht des trockenen lignocellulosehaltigen Materials, in Kontakt gebracht wird.

10. Verfahren gemäß einem der vorhergehenden Ansprüche, **dadurch gekennzeichnet, dass** das Aushärten des Bindemittels ein Verpressen des lignocellulosehaltigen Materials mit dem Bindemittel umfasst.
